# EUROPEAN PATENT APPLICATION

(11) **EP 4 589 359 A1**
(43) Date of publication of application: **23.07.2025**
(21) Application number: 22960234.7
(22) Date of filing: 30.09.2022
(51) Int. Cl.: G02B 23/16

(54) **DUAL-LIGHT FUSION NIGHT-VISION DEVICE**

(71) Applicant: Raytron Technology Co., Ltd., Yantai, Shandong 264006 (CN)
(72) Inventor: YAO, Yao, Yantai, Shandong 264006 (CN); WANG, Shaolong, Yantai, Shandong 264006 (CN); ZHAO, Yizhuo, Yantai, Shandong 264006 (CN); WANG, Shenglei, Yantai, Shandong 264006 (CN); HAN, Yue, Yantai, Shandong 264006 (CN); MOU, Daolu, Yantai, Shandong 264006 (CN)
(74) Representative: Reiser & Partner Patentanwälte mbB
(86) International application number: PCT/CN2022/123072
(87) International publication number: WO 2024/065607

(57) **Abstract**

The present application provides a dual-light fusion night-vision device, comprising a right display lens set, a left display lens set and a bridging assembly. The right display lens set comprises: a right lens barrel; a right low-light objective lens set, disposed on the right lens barrel along a right low-light optical axis; and an infrared lens set, disposed on the right lens barrel along an infrared optical axis. The left display lens set comprises: a left lens barrel; and a left low-light objective lens set, disposed on the left lens barrel along a left low-light optical axis. The bridging assembly connects a right bridging joint member and a left bridging joint member, such that the right low-light optical axis is parallel to the left low-light optical axis. In the present application, the right display lens set uses a fusion of low-light and infrared, and has the advantage of dual-spectrum fusion imaging. The right display lens set and the left display lens set are connected by means of the bridging assembly, and have the advantage of stereoscopic imaging, thereby achieving binocular stereoscopic discerning vision functionality.

## Description

### TECHNICAL FIELD

This application relates to the field of night vision devices, and in particular to a dual-light fusion night vision device.

### BACKGROUND

Low-light night vision systems take image intensifiers as a core component which amplifies weak moonlight, starlight, atmospheric glow, etc. reflected from a target scene, so as to obtain a bright scene image that can be observed by human eyes. The Low-light image intensifiers are a photoelectric device formed by an intensifier tube and a high-voltage power supply through a potting process, the imaging principle of which is that a photoelectric cathode converts an optical image into an electronic image, an electronic optical imaging system (electrode system) transfers the electronic image to a fluorescent screen and, in the process of transferring, enhances the electronic energy and scales the electronic image, and the fluorescent screen performs an electro-optical conversion to convert the electronic image into a visible light image. This imaging principle has the advantages of continuous target surface for the photoelectric imaging surface, and high resolution, clear imaging, visual ability that are close to the human eye.

Infrared thermal imaging cameras convert invisible infrared energy emitted by objects into visible thermal images. Different colors on a thermal image represent different temperatures of the object being measured. By observing the thermal image, one can see the overall temperature distribution of the target being measured, and study its heat generation, thereby making decisions for further actions. The working principle of modern thermal imaging cameras involves using photoelectric devices to detect and measure radiation, and establishing a correlation between radiation and surface temperatures. All objects above absolute zero (-273°C) emit infrared radiation. Thermal imaging cameras use infrared detectors and optical imaging lenses to capture the infrared radiation patterns from the target objects and reflect them onto the photosensitive elements of the detectors, thereby generating infrared thermal images. The advantages of infrared thermal imaging cameras include the ability to distinguish temperature differences, the capability to display various thermal imaging modes through algorithms, and the ability to overlay sensor information.

Most existing night vision products are either single low-light night vision or single infrared night vision. Each has its own advantages and disadvantages, and they have the disadvantages of relatively poor stereoscopic visual discrimination and lower product integration.

### TECHNICAL PROBLEM

In order to solve the existing technical problems, the present application provides a dual-light fusion night vision device, which is capable of integrating and displaying images from both low-light and infrared light, thereby enhancing stereoscopic visual discrimination.

### TECHNICAL SOLUTION

In order to achieve the above objective, the technical solution of the embodiments of the present application is realized below.

Embodiments of the present application provide a dual-light fusion night vision device, comprising a right display lens assembly, a left display lens assembly, and a bridge bracket assembly, wherein the right display lens assembly and the left display lens assembly are detachably connected through the bridge bracket assembly, characterized in that:
the right display lens assembly includes:
a right barrel, defining a right low-light optical axis and an infrared optical axis, wherein the infrared optical axis is parallel to the low-light optical axis;
a right low-light objective group, positioned along the right low-light optical axis on the right barrel, for low-light optical transmission and imaging to obtain a low-light image; and
an infrared lens group, positioned along the infrared optical axis on the right barrel, for infrared optical transmission and imaging to obtain an infrared image;
and the left display lens assembly includes:
   a left barrel, defining a left low-light optical axis; and
   a left low-light objective group, positioned along the left low-light optical axis on the left barrel, for low-light optical transmission and imaging to obtain a low-light image;
   wherein the bridge bracket assembly connects the right display lens assembly and the left display lens assembly in such a way that the right low-light optical axis is parallel to the left low-light optical axis.

In one embodiment, the bridge bracket assembly comprises a bridge bracket body, which extends on both sides to form a right bridge pivot and a left bridge pivot with parallel axes;
the right bridge bracket interface comprises a right bridge bracket interface body and a right bridge bracket adjustment screw, the right bridge bracket interface body is installed on the right barrel;
the left bridge bracket interface comprises a left bridge bracket interface body and a left bridge bracket adjustment screw, the left bridge bracket interface body is installed on the left barrel;
the right bridge bracket interface body is rotatably mounted on the right bridge pivot, the right bridge bracket adjustment screw is screwed into the right bridge bracket interface body perpendicular to the right bridge pivot to lock the right display lens assembly at a certain angle around the right bridge pivot;
the left bridge bracket interface body is rotatably mounted on the left bridge pivot, and the left bridge bracket adjustment screw is screwed into the left bridge bracket interface body perpendicular to the left bridge pivot to lock the left display lens assembly at a certain angle around the left bridge pivot.

In one embodiment, the bridge bracket component further includes a right ridge bracket pivot plate and a left ridge bracket pivot plate, which are mounted on the bridge bracket body;
the right ridge bracket pivot plate is coaxially equipped with a right plate pivot corresponding to the right bridge pivot, the right bridge pivot and the right plate pivot are inserted into the right bridge bracket connection hole on the right bridge bracket interface body from both ends, and the right bridge bracket adjustment screw is screwed into the right adjustment screw hole that is perpendicular to and through the right bridge bracket connection hole;
the left ridge bracket pivot plate is coaxially equipped with a left plate pivot corresponding to the left bridge pivot, the left bridge pivot and the left plate pivot are inserted into the left bridge bracket connection hole on the left bridge bracket interface body from both ends, and the left bridge bracket adjustment screw is screwed into the left adjustment screw hole that is perpendicular to and through the left bridge bracket connection hole.

In one embodiment, the bridge bracket assembly further comprises a right plate pin, a left plate pin, a right plate screw, and a left plate screw; the right bridge bracket pivot plate is rotatably mounted on the right rear side of the bridge bracket body through the right plate pin, and is locked to the bridge bracket body through the right plate screw; the left bridge bracket pivot plate is rotatably mounted on the left rear side of the bridge bracket body through the left plate pin, and is locked to the bridge bracket body through the left plate screw.

In one embodiment, the right bridge pivot and the right plate pivot are each fitted with a pivot washer, which abuts against both ends of the right bridge bracket connection hole; and the left bridge pivot and the left plate pivot are each fitted with a pivot washer, which abuts against both ends of the left bridge bracket connection hole.

In one embodiment, the bridge bracket body is equipped with a bridge transition interface on its top for external connections; the bridge bracket body is provided with a bridge function knob, and the bridge bracket body is provided with bridge function buttons on both the left and right sides of the top, the bridge function knob and the bridge function buttons are used to control and adjust the right display lens group and the left display lens group; and the bridge bracket body is provided with bracket function windows for external sensing and internal information transmission on both sides of the front end.

In one embodiment, the left display lens group further includes a left eyepiece adjustment flange, and the left eyepiece group is adjustably mounted on the left barrel via the left eyepiece adjustment flange.

In one embodiment, the left display lens group further includes a left low-light image intensifier and a compression ring, the left low-light image intensifier is positioned along the left low-light optical axis between the left low-light objective group and the left eyepiece group, and the compression ring is threadedly connected to the left barrel to secure the left low-light image intensifier within the left barrel.

In one embodiment, the right barrel includes a front cover plate and a barrel body, the front cover plate is installed at a front opening of the barrel body, and the right low-light objective group and the infrared lens group are mounted on the front cover plate.

In one embodiment, the infrared lens group includes an infrared objective, an infrared objective adjustment flange, and an infrared imaging component positioned along the infrared optical axis; the infrared objective is fixed within the infrared objective adjustment flange, which is adjustably mounted on the front cover plate; and by moving the infrared objective adjustment flange in a plane perpendicular to the infrared optical axis, the infrared objective can be moved to adjust the infrared imaging position.

In one embodiment, the right display lens group further includes an image intensifier bracket; the image intensifier bracket is positioned along the right low-light optical axis at the rear end of the right low-light objective group, and is adjustably connected to the front cover plate; and a right low-light image intensifier is removably installed in the image intensifier bracket along the right low-light optical axis.

In one embodiment, the image intensifier bracket includes a mounting tube, an adjustment screw ring, an optical combiner, and an elastic component; the mounting tube is used to install the right low-light image intensifier; and the adjustment screw ring is connected to the front cover plate and the mounting tube via reverse threads along the right low-light optical axis, so that the mounting tube and the front cover plate move towards or away from each other along the right low-light optical axis when the adjustment screw ring is rotated.

In one embodiment, the right display lens group further includes a display component that is signal-connected to infrared lens group, the optical combiner is positioned along the right low-light optical axis between the right low-light image intensifier and the eyepiece group; and the display component is located on one side of the optical combiner and is connected to the infrared lens group to display infrared images.

In one embodiment, the display component includes a display screen and a connecting cable, the infrared lens group transmits infrared images to the display screen via the connecting cable for display; and the display screen is larger than a display area used for displaying the infrared image, allowing the position of the display area to be adjusted on the display screen.

### BENEFICIAL EFFECTS

The low-light fusion night vision device provided by the embodiments of the present application has at least the following beneficial effects: in dual-light fusion night vision device of the present application, the right display lens group employs a dual-light fusion solution combining low-light and infrared light, achieving the visual effect of fused low-light imaging and infrared imaging and having the advantages of dual-spectral fusion imaging, enhancing target discrimination capabilities and significantly improving the user experience. The right and left display lens groups are connected via the bridge bracket assembly, offering the advantage of stereoscopic imaging between the left and right eyes and realizing the function of binocular stereoscopic visual discrimination.

### BRIEF DESCRIPTION OF THE DRAWINGS

FIG. 1 is a perspective view of a dual-light fusion night vision device according to one embodiment of the present application.
FIG. 2 is a perspective view of a right display lens assembly of the dual-light fusion night vision device of FIG. 1.
FIG. 3 is an exploded view of the right display lens assembly of FIG. 2.
FIG. 4 is a further exploded view of the right display lens assembly of FIG. 3, removing the right bridge bracket interface.
FIG. 5 is an exploded view of optical parts in FIG. 4.
FIG. 6 is an assembled view of FIG. 5.
FIG. 7 is a cross-sectional view of FIG. 6, showing the optical path.
FIG. 8 is a schematic diagram of a normal fusion image of low-light imaging and infrared thermal imaging.
FIG. 9 is a schematic diagram of a fusion image of the overlapping deviation between low-light imaging and infrared thermal imaging.
FIG. 10 is a perspective view of a left display lens assembly of the dual-light fusion night vision device of FIG. 1.
FIG. 11 is an exploded view of the left display lens assembly of FIG. 10, removing the left bridge bracket interface.

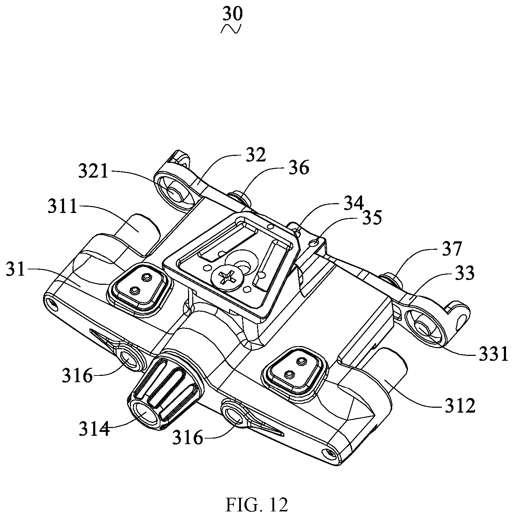

FIG. 12 is an enlarged perspective view of the bridge frame assembly of the dual-light fusion night vision device of FIG. 1 from another angle.

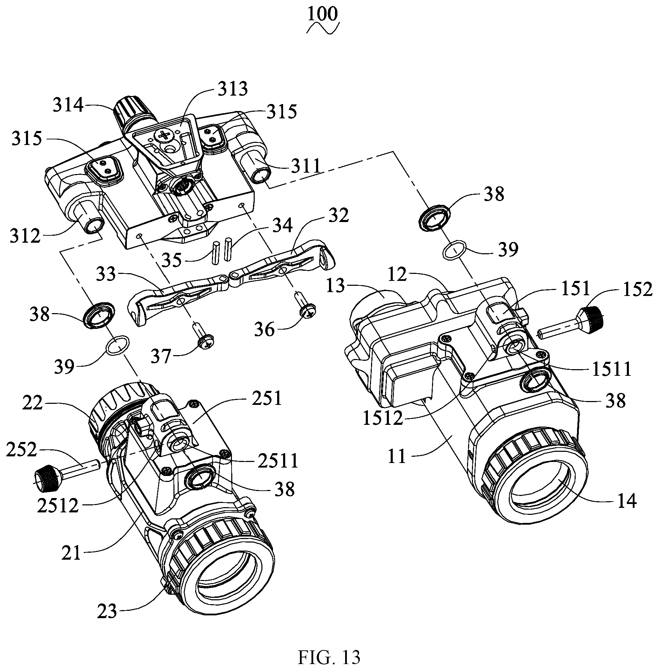

FIG. 13 is an exploded view of the dual-light fusion night vision device of FIG. 1.

### Reference Numerals:

Reference Numerals:
right display lens assembly 10;
right barrel 11, right low-light objective group 12, infrared lens group 13, right eyepiece group 14, right bridge bracket interface 15, image intensifier mount 16, display component 17, right low-light image intensifier 18, main control board 19;
front cover plate 111, barrel body 112, front cover seal ring 113, eyepiece seal foam 114, bridge bracket interface seal ring 115;
low-light lens hole 1111, infrared lens hole 1112, threaded interface 1113, positioning notch 1114;
infrared objective 131, infrared objective adjustment flange 132, infrared imaging component 133, infrared objective fixing screw 134;
right eyepiece 141, right eyepiece handwheel 142;
right bridge bracket interface body 151, right bridge bracket adjustment screw 152; right bridge bracket connection hole 1511, right adjustment screw hole 1512;
mounting tube 161, adjustment screw ring 162, optical combiner 163, elastic component 164;
tube mouth thread 1611, lug 1613;
display screen 171, connecting cable 172; display area 1711;
left display lens assembly 20;
left barrel 21, left low-light objective group 22, left eyepiece group 23, left low-light image intensifier 24, left bridge bracket interface 25, left eyepiece adjustment flange 26, gasket 27, clamping ring 28;
left bridge bracket interface body 251, left bridge bracket adjustment screw 252; left bridge bracket connection hole 2511, left adjustment screw hole 2512;
bridge bracket assembly 30;
bridge bracket body 31, right bridge bracket pivot plate 32, left bridge bracket pivot plate 33, right plate pin 34, left plate pin 35, right plate screw 36, left plate screw 37, pivot washer 38, pivot seal ring 39;
right bridge pivot 311, left bridge pivot 312, bridge transition interface 313, bridge function knob 314, bridge function button 315, bridge function window 316;
right plate pivot 321, left plate pivot 331;
fusion image 40; low-light image 41, infrared image 42;
dual-light fusion night vision device 100.

### DESCRIPTION OF THE EMBODIMENTS

The technical solutions of the present application are hereinafter described in further detail in connection with the drawings and specific embodiments.

Unless otherwise defined, all technical and scientific terms used herein have the same meaning as commonly understood by those skilled in the art to which the present disclosure pertains. Terms used in the present application are intended for describing specific embodiments only and are not intended to limit implementations of the present application. The term "and/or" as used herein is meant to cover any and all combinations of one or more of the relevant listed items.

In the description of the present application, it is to be understood that the terms "center", "up", "down", "front" "back", "left", "right", "vertical", "horizontal", "top", "bottom", "inside", "outside", and other indications of the orientations or positional relationships are based on those shown in the figures and are intended only to facilitate the description of the present disclosure and to simplify the description, and are not intended to indicate or imply that the device or element referred to must have a particular orientation, be constructed and operated in a particular orientation, and therefore are not to be construed as limitations of the present disclosure. In the description of the present application, unless otherwise indicated, "multiple" means two or more.

In the description of the present application, it is to be noted that, unless otherwise expressly specified and limited, the terms "mounted", "connected", "coupled" are to be understood in a broad sense. For example, it may be a fixed connection or a detachable connection, or a connection in one piece; it may be a direct connection, an indirect connection through an intermediate medium, or a connection between internal spaces of two elements. For those of ordinary skill in the art, the specific meaning of the above terms in the present disclosure may be understood in accordance with the specific circumstances.

The present application provides a dual-light fusion night vision device, which allows users to install and use the entire device through a helmet and accessories. It offers strong target identification and information display capabilities in nighttime or low-visibility environments. The dual-light fusion night vision device features independent left and right displays, which provide superior stereoscopic vision with enhanced distance discrimination abilities for targets, compared to conventional monocular or binocular night vision devices. As an integrated product solution, the dual-light fusion night vision device inherits the clear imaging, high resolution, and low display latency of low-light night vision devices, while also integrating the thermal imaging capabilities of infrared thermography, such as temperature difference-based target identification and integrated information display. This further enhances target search efficiency and improves the ability to distinguish threats and display overlay information.

The present application provides a dual-light fusion night vision device, which allows users to install and use the entire device through a helmet and accessories. It offers strong target identification and information display capabilities in nighttime or low-visibility environments. The dual-light fusion night vision device features independent left and right displays, which provide superior stereoscopic vision with enhanced distance discrimination abilities for targets, compared to conventional monocular or binocular night vision devices. As an integrated product solution, the dual-light fusion night vision device inherits the clear imaging, high resolution, and low display latency of low-light night vision devices, while also integrating the thermal imaging capabilities of infrared thermography, such as temperature difference-based target identification and integrated information display. This further enhances target search efficiency and improves the ability to distinguish threats and display overlay information.

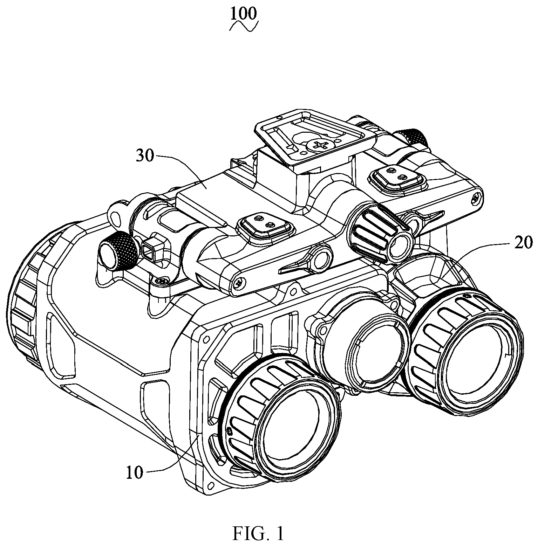

The structure of a dual-light fusion night vision device 100 according to one embodiment of the present application is shown in FIG. 1. The illustrated dual-light fusion night vision device 100 includes a right display lens assembly 10 (i.e., the first monocular lens assembly), a left display lens assembly 20 (i.e., the second monocular lens assembly), and a bridge bracket assembly 30. The right display lens assembly 10 and the left display lens assembly 20 are connected through the bridge bracket assembly 30 to form a binocular, dual-channel, dual-light night vision imaging device. The right display lens assembly 10 serves as a low-light and infrared fusion display component, primarily responsible for low-light imaging and display, infrared imaging and display, integrated information processing and display, etc. It also cooperates with the bridge bracket assembly 30 to achieve the left-eye side-flip function, interpupillary distance adjustment function, and other software-controlled functions. The left display lens assembly 20 serves as a low-light night vision display component, mainly responsible for low-light imaging and display adjustment. It also cooperates with the bridge bracket assembly to achieve the left-eye side-flip function, interpupillary distance adjustment function, and other software-controlled functions. The bridge bracket assembly 30, serving as the main connection and control module, provides structural connection and support. It also works in conjunction with the internal hardware to complete electrical control and signal transmission functions for both the left and right eyes.

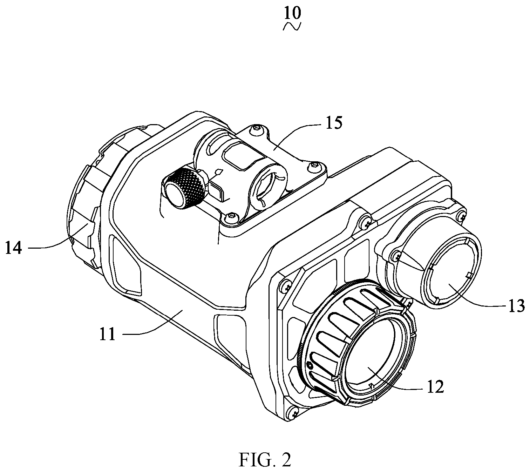

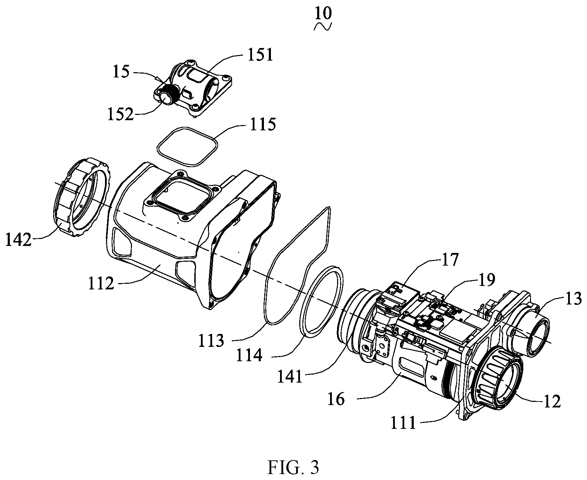

The right display lens assembly 10 of the dual-light fusion night vision device 100 is shown in FIGS. 2 and 3. The right display lens assembly 10 integrates the functions of low-light imaging, infrared imaging, and fusion imaging functions. The objective and eyepiece components can be adjusted for optical imaging to adapt to different usage conditions. The right display lens assembly 10, which integrates low-light and infrared dual-light fusion imaging, includes a right low-light objective group 12 for low-light night vision, an infrared lens group 13 for thermal imaging, and a right bridge bracket interface 15 for the gull-wing flip function. The right bridge bracket interface 15 is connected to the bridge bracket assembly 30, thereby integrating the right display lens assembly 10 with the left display lens assembly 20 into a single unit. As a result, the dual-light fusion night vision device 100 is a binocular, dual-channel, dual-light fusion night vision imaging device, and has functions such as upward flipping and gull-wing flipping.

Specifically, the right display lens assembly 10 includes a right barrel 11, the right low-light objective group 12, the infrared lens group 13, a right eyepiece group 14, the right bridge bracket interface 15, an image intensifier mount 16, a display component 17, a right low-light image intensifier 18, and a main control board 19. The right low-light objective group 12, the infrared lens group 13, the right eyepiece group 14, and the right bridge bracket interface 15 are mounted on the right barrel 11, while the image intensifier mount 16, the display component 17, the right low-light image intensifier 18, and the main control board 19 are installed inside the right barrel 11. The right barrel 11 defines a right low-light optical axis and an infrared optical axis, with the infrared optical axis being parallel to the right low-light optical axis, and serves as a housing structure, providing support and fixation for the components. The right low-light objective group 12 is primarily responsible for low-light optical transmission and imaging; the infrared lens group 13 handles infrared optical transmission and imaging. The right eyepiece group 14 acts as an optical imaging transfer component, providing imaging display and diopter adjustment functions. The right bridge bracket interface 15 serves as the connecting piece between the right display lens assembly 10 and the bridge bracket assembly 30, linking the two together. The image intensifier mount 16 mainly functions to install the right low-light image intensifier 18 and to provide connection and fixation. The display component 17 is the device for displaying infrared images. The right low-light image intensifier 18 is a low-light imaging device, used for displaying the low-light image.

The right barrel 11 includes a front cover plate 111 and a barrel body 112. The front cover plate 111 is installed at a front opening of the barrel body 112 through a front cover seal ring 113. The right eyepiece group 14 is installed at a rear end of the barrel body 112 through an eyepiece seal foam 114. The right bridge bracket interface 15 is installed at a top opening of the barrel body 112 through a bridge bracket interface seal ring 115. This achieves the structural sealing of the interior of the right barrel 11, ensuring the overall structural seal of the right display lens assembly 10.

The right low-light objective group 12 and the infrared lens group 13 are installed on the front cover plate 111. The image intensifier mount 16 is adjustably connected to the front cover plate 111. The right eyepiece group 14, the display component 17, the right low-light image intensifier 18, and the main control board 19 are all installed on the image intensifier mount 16 and encapsulated within the barrel body 112.

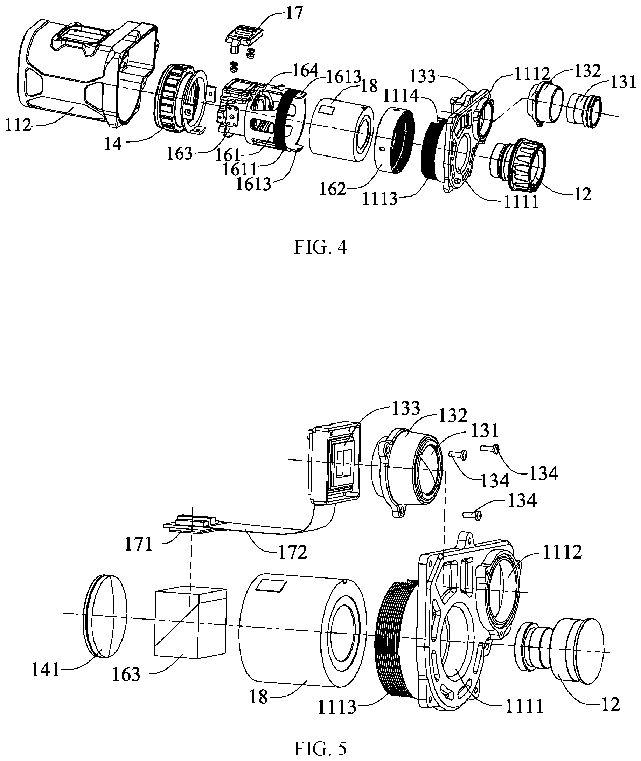

Referring to FIG. 4, the front cover plate 111 is a flat plate that closes the front opening of the barrel body 112. It is provided with a low-light lens hole 1111 and an infrared lens hole 1112, which are used to install the right low-light objective group 12 and the infrared lens group 13, respectively. The right low-light objective group 12 and the infrared lens group 13 are installed side by side on the front cover plate 111 in such a way that the right low-light optical axis and the infrared optical axis are parallel. Since both the right low-light objective group 12 and the infrared lens group 13 are on the same plane of the front cover plate 111, the alignment and adjustment of the optical system are greatly simplified.

The rear end of the low-light lens hole 1111 is provided with a threaded interface 1113 around its axis (the right low-light optical axis) for the installation and adjustment of the image intensifier mount 16. The side wall of the threaded interface 1113 also provides positioning notches 1114 facing the rear end. In the illustrated embodiment, two positioning notches 1114 are arranged in the diametrical direction of the threaded interface 1113. The threaded interface 1113 for connecting to the image intensifier mount 16 extends from the rear end of the front cover plate 111, and is designed in an integrated manner, which reduces the number of adapters and enhances stability. The thickness at the bottom of the threaded interface 1113 also increases the overall structural strength of the front cover plate 111.

The infrared lens group 13 comprises an infrared objective 131, an infrared objective adjustment flange 132, and an infrared imaging component 133. The infrared objective adjustment flange 132 serves as an adapter structure between the infrared objective 131 and the front cover plate 111, providing both fixation and adjustment functions. The infrared imaging component 133 performs infrared image acquisition and processing. The infrared objective 131 is fixed within the infrared objective adjustment flange 132, which is installed into the infrared lens hole 1112 on the front cover plate 111 from the front end through a seal ring. The infrared imaging component 133 is installed at the rear end of the infrared lens hole 1112 along the infrared optical axis, used to sense the infrared light focused by the infrared objective 131. In conventional designs, infrared objective lenses and infrared detectors are typically installed on opposite sides of a cover plate or housing, the entire infrared lens group is connected through the cover plate or housing, and infrared imaging adjustment is achieved by altering the relative positions between the infrared objective lens and the infrared detector. In the illustrated embodiment, the infrared objective 131 is not directly mounted on the front cover plate 111. Instead, it is installed on the front cover plate 111 through the infrared objective adjustment flange 132. By moving the infrared objective adjustment flange 132 (along with the infrared objective 131), the infrared imaging position can be adjusted. Compared to directly moving the relatively fragile infrared detector in the prior art, it is safer and better protects the infrared detector. The infrared lens group 13 also includes multiple infrared objective fixing screws 134, which are arranged around the infrared objective adjustment flange 132. These screws are used to secure the infrared objective adjustment flange 132 and the infrared objective 131 inside to the fastening holes of the infrared lens hole 1112 on the front cover plate 111.

The right eyepiece group 14 includes a right eyepiece 141 and a right eyepiece handwheel 142. The right eyepiece 141 is installed along the right low-light optical axis on the image intensifier mount 16 and protrudes from the rear end of the barrel body 112. The right eyepiece handwheel 142 is installed from the rear end onto the right eyepiece 141. In conventional designs, eyepieces are typically mounted directly onto the housing, and thin-walled structures are prone to deformation under force. In the illustrated embodiment, to enhance the stability of the optical system for combining image, the right eyepiece 141 is assembled directly with the image intensifier mount 16 (and an optical combiner 163 on it). The seal between the right eyepiece 141 and the barrel body 112 is achieved using an eyepiece seal foam 114, which provides cushioning to mitigate the impact of any deformation of the barrel body 112 on the optical components. Furthermore, the right eyepiece 141 abandons the conventional end-face mounting method and is installed on the image intensifier mount 16 by locking screws from sides, which helps to reduce the diameter of the eyepiece.

The right low-light objective group 12 and the right low-light image intensifier 18 are the main components of the low-light night vision system of the dual-light fusion night vision device 100. The infrared lens group 13, which includes the infrared objective 131 and the infrared imaging component 133, constitutes the main part of the thermal imaging system. The image intensifier mount 16 (and the optical combiner 163 on it), the display component 17, and the right eyepiece 141 are the main components of the combined image display system. All three optical systems - the low-light night vision system, the thermal imaging system, and the combined image display system - are integrated onto the front cover plate 111, resulting in a highly compact overall structure.

The right bridge bracket interface 15 includes a right bridge bracket interface body 151 and a right bridge bracket adjustment screw 152. The right bridge bracket interface body 151 is installed on the top of the right barrel 11 through a bridge bracket interface seal ring 115. The right bridge bracket interface body 151 is used to connect one side of the bridge bracket assembly 30 and is adjustable and lockable through the right bridge bracket adjustment screw 152.

The image intensifier mount 16 is positioned along the right low-light optical axis at the rear end of the right low-light objective group 12 and is detachably installed on the front cover plate 111. The image intensifier mount 16 includes a mounting tube 161, an adjustment screw ring 162, the optical combiner 163, and an elastic component 164. The mounting tube 161 serves as the main body for accommodating the right low-light image intensifier 18. One end of the adjustment screw ring 162 is screwed onto the front end of the mounting tube 161, while the other end is screwed to the threaded interface 1113 at the rear end of the front cover plate 111. The elastic component 164 is placed at the bottom of the mounting tube 161, located between the right low-light image intensifier 18 and the optical combiner 163, to ensure the stable installation of the right low-light image intensifier 18 and allow for positional adjustments along the right low-light optical axis in conjunction with the adjustment screw ring 162. The rear end of the mounting tube 161 is where the optical combiner 163 is located, while the front end features an opening for inserting the right low-light image intensifier 18 and is equipped with tube mouth threads 1611. The front end of the mounting tube 161 also protrudes forward to form a lug 1613. By integrating the optical combiner 163 and the mounting tube 161 for accommodating the right low-light image intensifier 18 into a single image intensifier mount 16, this unitary design further enhances the stability of the support structure.

The mounting tube 161 employs a cylindrical skeletal structure that securely holds the right low-light image intensifier 18 therein. This skeletal structure is made from ultra-lightweight magnesium alloy and is further reduced in weight by the presence of hollowed-out holes on the mounting tube 161. The right low-light image intensifier 18 is inserted through the opening at the front end of the mounting tube 161. The lug 1613 at the front end passes through the adjustment screw ring 162 and engages with the positioning notch 1114 on the threaded interface 1113, thereby constraining the rotational degree of freedom of the mounting tube 161 around the right low-light optical axis.

The inner wall of the adjustment screw ring 162 facing the mounting tube 161 is provided with a first internal thread, which is used to threadedly connect with a tube mouth thread 1611 of the mounting tube 161. The inner wall of the adjustment screw ring 162 facing the front cover plate 111 at the other end is provided with a second internal thread, which is threaded with the threaded interface 1113 on the front cover plate 111 to connect the mounting tube 1611 to the front cover plate 111 along the right low-light optical axis direction. The spiral directions of the first internal thread and the second internal thread are opposite, and the spiral directions of the tube mouth thread 1611 and the external thread of the threaded interface 1113 are opposite correspondingly. Thus, the first internal thread and the tube mouth thread 1611 form a set of threads with opposite directions compared to the second internal thread and the threaded interface 1113. By rotating the adjustment screw ring 162, the position of the mounting tube 161 and the optical combiner 163 relative to the front cover plate 111 along the right low-light optical axis can be changed. The front end of the right low-light image intensifier 18 is in contact with the end face of the threaded interface 1113, and its rear end is in contact with the bottom of the mounting tube 161 through one end of the elastic component 164. By rotating the adjustment screw ring 162, the mounting tube 161 moves towards or away from the front cover plate 111, the position of the optical combiner 163, which is fixedly connected to the mounting tube 161, also changes accordingly. This allows for the adjustment of the relative distance between the optical combiner 163 and the right low-light image intensifier 18, and can accommodate different models of the right low-light image intensifier 18.

The optical combiner 163 is positioned along the right low-light optical axis at the rear end of the low-light image intensifier 18, primarily playing a role in superimposition display of low-light and infrared images, and fixation.

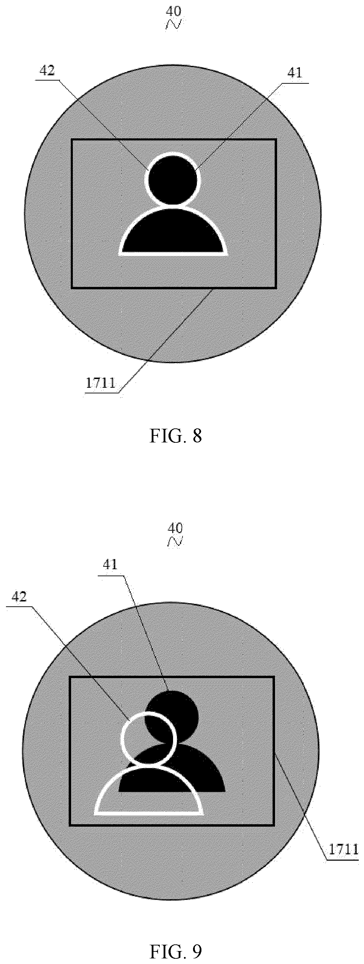

The display component 17 is connected to the infrared imaging component 133 and is used to display the infrared image from the infrared lens group 13. It is installed above the optical combiner 163 through screws and washers that provide a fixed connection and allow for fine-tuning. The low-light image from the right low-light objective group 12 and the infrared image from the infrared lens group 13 are fused at the optical combiner 163. As shown in FIG. 8, the observer can see a fusion image 40 of low-light imaging and infrared thermal imaging through the right eyepiece group 14. When a low-light image 41 is superimposed with an infrared image 42 displayed in a display area 1711 of a display screen 171, the low-light target and infrared target will be displayed in coincidence. The display effect of the infrared target can be switched through various modes controlled by software to meet different display requirements.

The main control board 19 is installed on mounting pillars set on the mounting tube 161 by fasteners. The main control board 19 integrates the power supply circuits for the display component 17 and the right low-light image intensifier 18. The main control board 19 is located on the mounting tube 161 to facilitate power supply to the display component 17 at the rear and the low-light image intensifier 18 below.

It should be noted that when the dual-light fusion night vision device 100 is sold as a product, the right display lens assembly 10 may not include the low-light image intensifier 18. Consumers can purchase and install an image intensifier according to their preferences after buying the product.

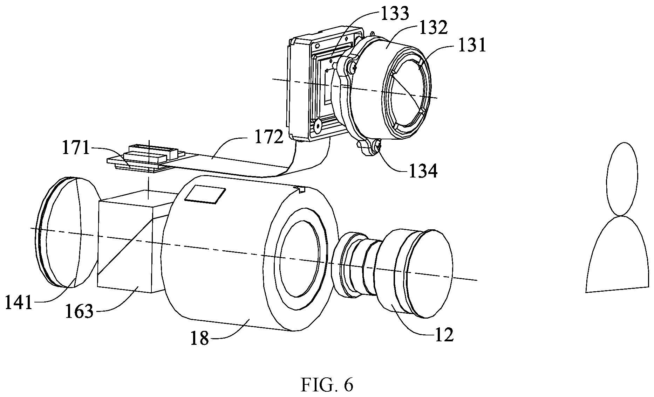

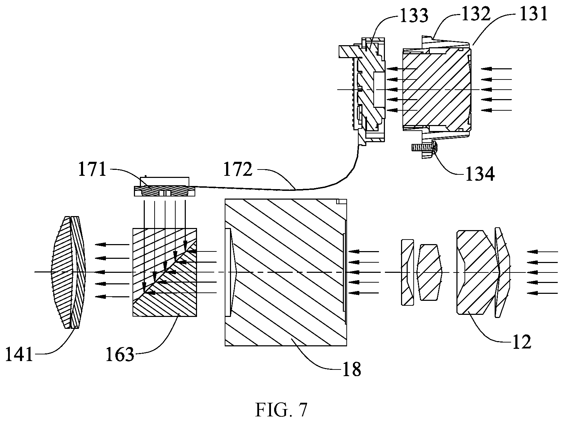

Referring to FIGS. 5, 6, and 7, the imaging principle and process of the right display lens assembly 10 are as follows.

External image lights enter the right low-light objective group 12, where they are transmitted and imaged, and then converted into electrical signals and displayed through phosphor screen excitation by the right low-light image intensifier 18. Finally, the image is displayed on the imaging plane after brightness enhancement. In this way, the low-light imaging optical path is formed.

External image lights are transmitted and imaged through the infrared objective 131, and then converted into electrical signals by the infrared imaging component 133. The image is processed and analyzed through internal circuits and processing programs, resulting in a digital video format file. The file is transmitted via the connecting cable 172 to the display screen 171 for image display. In this way, the infrared imaging optical path is formed.

The low-light image displayed by the right low-light image intensifier 18 and the infrared image displayed on the screen 171, which are images in two different spectral bands, are superimposed and fused at a 45-degree angle by a semi-transparent and semi-reflective prism inside the optical combiner 163, and the fused image is then transmitted and displayed through the right eyepiece 141. The low-light and infrared fusion optical path is formed in this step. The right display lens assembly 10 can be adjusted for dual-light fusion, and the method for dual-light fusion adjustment includes the following steps:
Step S01, observe through the right eyepiece group 14 whether there is any overlap deviation between the low-light image 41 and the infrared image 42.
Step S02, if there is an overlap deviation between the low-light image 41 and the infrared image 42, loosen the infrared objective fixing screws 134. Move the infrared objective 131 within the infrared lens hole 1112 on the front cover plate 111 to perform translational adjustments in the vertical or horizontal direction on the plane. After the adjustment, perform optical-mechanical calibration. The infrared imaging component 133 outputs the calibrated image, which is then displayed on the display component 17.
Step S03, tighten the infrared objective fixing screws 134 to secure the infrared objective adjustment flange 132, thereby fixing the infrared objective 131 to the front cover plate 111.
Step S04, during the overall inspection of the device, check whether there is still any minor overlap deviation between the low-light image 41 and the infrared image 42.
Step S05, if there is still a minor overlap deviation at the edges of the low-light image 41 and the infrared image 42, adjust the display area 1711 of the display screen 171 to control the display position of the infrared image 42. This allows for fine-tuning of the display area 1711 in the vertical or horizontal direction to achieve calibration.

The display effect of the fusion image 40 from the right display lens assembly 10 after dual-light fusion is shown in FIG. 8. When the infrared objective adjustment flange 132 and the infrared imaging component 133 are centered, the optical imaging is deviation-free, the low-light image 41 and the infrared image 42 overlap perfectly, resulting in a normal dual-light fusion image 40 as shown in FIG. 8, which meets the requirements for search applications. When there is an overlap deviation between the low-light image 41 and the infrared image 42, as shown in FIG. 9, it will affect the usage effect.

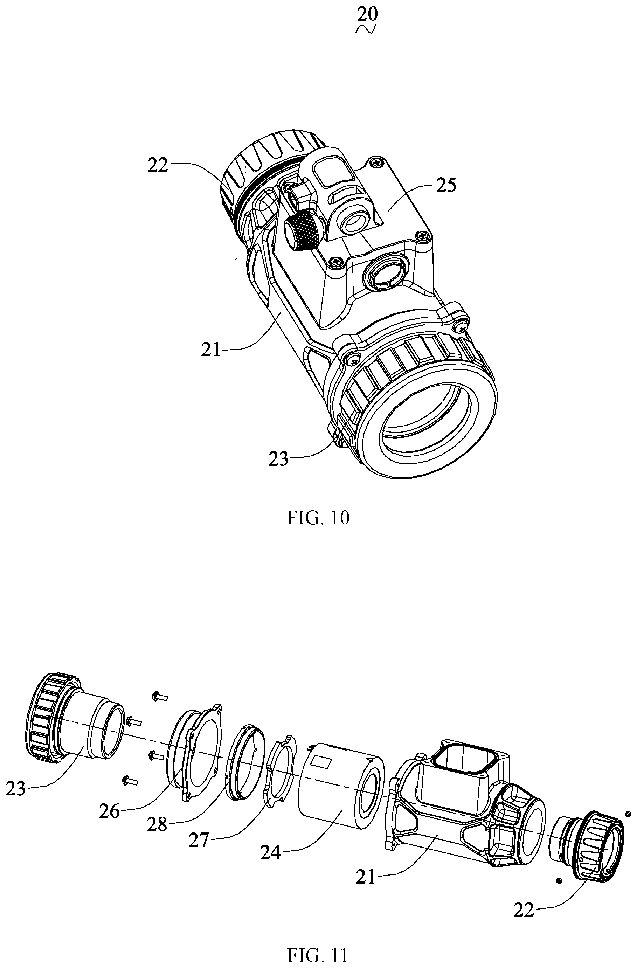

When an overlap deviation as shown in FIG. 9 occurs in the image display, the infrared objective 131 can be moved for translational adjustments in the vertical or horizontal direction on the plane. After the adjustment, optical-mechanical calibration is performed. The infrared imaging component 133 outputs the calibrated image, which is then displayed on the display component 17. The dual-light fusion image after the initial calibration is shown in FIG. 10. During the vertical and horizontal offset of the infrared objective 131, the optical convergence also follows with corresponding offsets. As a result, the infrared imaging component 133 produces a certain offset in the imaging picture accordingly, thereby achieving the purpose of calibration. After the calibration is completed, the infrared objective 131 and the infrared objective adjustment flange 132 can be fixed to the corresponding structure (i.e. front cover plate 111) through the infrared objective fixing screws 134, thus concluding the structural assembly and adjustment work.

The display screen 171 of the display component 17 for infrared imaging display is designed with a certain margin, making the area of the display screen 171 larger than the display area 1711. This allows the position of the display area 1711 on the display screen 171 to be controlled through software settings, thereby adjusting the display position of the infrared image 42 and ultimately achieving positional alignment with the low-light image 41. After completing the structural assembly and adjustment, during the overall inspection of the low-light image 41 and the infrared image 42, if there are still minor deviations at the edges of the images, the infrared imaging component 133 and the display component 17 can be used to achieve fine-tuning of the display area 1711 on the display screen 171 through software and external hardware. This includes vertical and horizontal translation calibration control and storage, ultimately achieving coincidence between the infrared image 42 and the low-light image 41, and completing the alignment adjustment.

The left display lens assembly 20 of the dual-light fusion night vision device 100, as shown in FIGS. 10 and 11, integrates low-light imaging function and contains electronic components to achieve functional control. The right display lens assembly 10 for low-light imaging includes the left low-light objective group 22 for low-light night vision, a left eyepiece group 23, a left low-light image intensifier 24, and a left bridge bracket interface 25 for the gull-wing flip. The left bridge bracket interface 25 is connected to the bridge bracket assembly 30, thereby integrating the left display lens assembly 20 with the right display lens assembly 10 into a single unit. As a result, the dual-light fusion night vision device 100 is a binocular, dual-channel, dual-light fusion night vision imaging device, and has functions such as upward flipping and gull-wing flipping.

Specifically, the left display lens assembly 20 includes a left barrel 21, a left low-light objective group 22, a left eyepiece group 23, a left low-light image intensifier 24, a left bridge bracket interface 25, a left eyepiece adjustment flange 26, a gasket 27, and a compression ring 28. The left low-light objective group 22, the left eyepiece group 23, and the left bridge bracket interface 25 are mounted on the left barrel 21, while the left low-light image intensifier 24 is installed inside the left barrel 21. The left barrel 21 defines a left low-light optical axis, which is parallel to the right low-light optical axis, and serves as a housing structure, providing support and fixation for the other components. The left low-light objective group 22 is primarily responsible for the optical transmission and imaging of low-light conditions. The left eyepiece group 23 acts as an optical imaging transfer component, serving the functions of image display and diopter adjustment. The left low-light image intensifier 24 is the device for low-light imaging, responsible for displaying the low-light image. The left bridge bracket interface 25 serves as the connecting piece between the left display lens assembly 20 and the bridge bracket assembly 30, linking the right display lens assembly 10 with the bridge bracket assembly 30. The left eyepiece adjustment flange 26 is used for the installation and adjustment of the left eyepiece group 23.

More specifically, the left barrel 21 is a cylindrical structure arranged along the direction of the left low-light optical axis. The left low-light objective group 22, the left low-light image intensifier 24, and the left eyepiece group 23 are sequentially positioned in the left barrel 21 along the left low-light optical axis to achieve low-light imaging. The left low-light objective group 22 is equipped with a focusing adjustment ring, which serves to set the focus for distant or near objects. After adjustment, the focusing adjustment ring is secured using a set screw. The compression ring 28 is a threaded compression ring that connects with the left barrel 21 via internal and external threads, and also presses down on the gasket 27 and the low-light image intensifier 24. The left eyepiece adjustment flange 26 and the left eyepiece group 23 form the entire eyepiece assembly, and optical adjustment functions can be realized through the left eyepiece adjustment flange 26.

The left bridge bracket interface 25 includes a left bridge bracket interface body 251 and a left bridge bracket adjustment screw 252. The left bridge bracket interface body 251 is installed on the top of the left barrel 21 via a bridge bracket interface seal ring. The left bridge bracket interface body 251 is used to connect one side of the bridge bracket assembly 30 and is adjustable and lockable through the left bridge bracket adjustment screw 252.

The bridge bracket body 31 extends backward on both sides to form a right bridge pivot 311 and a left bridge pivot 312, respectively, with their axes being parallel to each other. The right bridge bracket pivot plate 32 is coaxially equipped with a right plate pivot 321 corresponding to the right bridge pivot 311. Both the right bridge pivot 311 and the right plate pivot 321 are inserted through the right bridge bracket connection hole 1511 in the right bridge bracket interface body 151 from the front and back. The right bridge bracket adjustment screw 152 is then screwed into the right adjustment screw hole 1512, which is perpendicular to and through the right bridge bracket connection hole 1511, to secure the right display lens assembly 10 at a certain angle around the right bridge pivot 311. The left bridge bracket pivot plate 33 is coaxially equipped with a left plate pivot 331 corresponding to the left bridge pivot 312. Both the left bridge pivot 312 and the left plate pivot 331 are inserted through the left bridge bracket connection hole 2511 in the left bridge bracket interface body 251 from the front and back. The left bridge bracket adjustment screw 252 is then screwed into the left adjustment screw hole 2512, which is perpendicular to and through the left bridge bracket connection hole 2511, to secure the left display lens assembly 20 at a certain angle around the left bridge pivot 312.

The right bridge pivot 311, the right plate pivot 321, the left bridge pivot 312, and left plate pivot 331 can each be fitted with a pivot washer 38 and a pivot seal ring 39 or just a pivot washer 38. These components are positioned against the ends of the right bridge bracket connection hole 1511 and the left bridge bracket connection hole 2511. The pivot washer 38 serves to adjust the clearance between the shaft and hole and provides a damping effect when the right display lens assembly 10 and the left display lens assembly 20 rotate around the right bridge pivot 311 and the left bridge pivot 312, respectively. The pivot seal ring 39 ensures the protection level IP67 for the right bridge pivot 311 and the left bridge pivot 312. After installation, the right bridge bracket pivot plate 32, left bridge bracket pivot plate 33, right plate pin 34, left plate pin 35, right plate screw 36, and left plate screw 37 play an important role in clamping and fixing the right display lens assembly 10, the left display lens assembly 20, the bridge bracket assembly 30, the pivot washers 38, and the pivot seal rings 39, and strengthen the structure, ultimately completing the realization of mechanical structure's movement.

The bridge bracket body 31 is provided with a bridge transition interface 313 on the top, which is used to achieve the external connection of the dual-light fusion night vision device 100. A bridge function knob 314 is located at the front end, and bridge function buttons 315 are positioned on both the left and right sides of the top of the bridge bracket body 31. The bridge function knob 314 and the bridge function buttons 315 primarily serve to control and adjust the low-light imaging components and infrared imaging components. On both sides of the front end of the bridge bracket body 31, there are bridge function windows 316, which are used for external sensing and internal information transmission.

In the dual-light fusion night vision device 100, the right display lens assembly 10 and the left display lens assembly 20 serve as the main observation components. They are connected to the bridge bracket assembly 30 through a cylindrical shaft structure via a shaft-hole fit. The right bridge bracket adjustment screw 152 and the left bridge bracket adjustment screw 252 achieve rotational adjustment of the right display lens assembly 10 and the left display lens assembly 20 around the bridge bracket assembly 30 by protruding through a threaded structure within the right and left display lens assemblies. This allows for the adjustment of the distance between the right display lens assembly 10 and the left display lens assembly 20, ultimately enabling the adjustment of the interpupillary distance for the user and enhancing the ergonomics of the product.

In summary, the dual-light fusion night vision device of the present application has the functions of low-light night vision, dual-light fusion night vision, and integrated binocular night vision capabilities, offers at least the following advantages:
(1) With the right eye as the conventional dominant eye, the right display lens assembly in the dual-light fusion night vision device employs a dual-light fusion solution that combines low-light and infrared imaging. This not only meets the requirements of compact size, low weight, and high ergonomics but also achieves the visual effect of dual-spectrum fusion imaging. The dual-light fusion night vision device possesses the advantages of strong discrimination ability and significantly improved user experience, and can satisfy a variety of customer needs, including low-light night vision, binocular stereoscopic night vision, infrared fusion night vision, and information overlay display night vision modes.
(2) The left display lens assembly of the dual-light fusion night vision device adopts a low-light night vision solution to meet conventional low-light observation needs. Combined with adjustable objective and eyepiece, it can accommodate both distant and near scenes and adjust according to the user's varying visual acuity. While achieving exceptional image quality and user-friendliness, the overall weight of the components has been effectively controlled.
(3) The right and left display lens assemblies are connected through a bridge bracket assembly with a flipping function, which has the advantages of stereoscopic imaging for both eyes, side-flipping functionality, and interpupillary distance adjustment and further enhances the overall performance of the device.

It is to be noted that, in this disclosure, the terms "comprise", "include" or any other variations thereof are intended to cover non-exclusive inclusion, such that a process, method, article or apparatus comprising a set of elements includes not only those elements but also other elements that are not expressly listed or that are inherent to such process, method, article or apparatus. Without further limitation, the fact that an element is defined by the phrase "include a ..." does not exclude the existence of another identical element in the process, method, article, or device including that element.

The foregoing are only specific embodiments of the present disclosure, but the scope of the present disclosure is not limited thereto. Various changes or substitutions that may be readily conceivable by those skilled in the art within the scope of the technology disclosed in the present disclosure shall fall into the scope of the present disclosure. Therefore, the scope of the present disclosure shall be determined based on the appended claims.

## Claims

1. A dual-light fusion night vision device, comprising a right display lens assembly (10), a left display lens assembly (20), and a bridge bracket assembly (30), wherein the right display lens assembly (10) and the left display lens assembly (20) are detachably connected through the bridge bracket assembly (30), **characterized in that**:
the right display lens assembly (10) includes:
a right barrel (11), defining a right low-light optical axis and an infrared optical axis, wherein the infrared optical axis is parallel to the low-light optical axis;
a right low-light objective group (12), positioned along the right low-light optical axis on the right barrel (11), for low-light optical transmission and imaging to obtain a low-light image; and
an infrared lens group (13), positioned along the infrared optical axis on the right barrel (11), for infrared optical transmission and imaging to obtain an infrared image;
and the left display lens assembly (20) includes:
a left barrel (21), defining a left low-light optical axis; and
a left low-light objective group (22), positioned along the left low-light optical axis on the left barrel (21), for low-light optical transmission and imaging to obtain a low-light image;
wherein the bridge bracket assembly (30) connects the right display lens assembly (10) and the left display lens assembly (20) in such a way that the right low-light optical axis is parallel to the left low-light optical axis.

2. The dual-light fusion night vision device according to claim 1, **characterized in that**: the bridge bracket assembly (30) comprises a bridge bracket body (31), which extends on both sides to form a right bridge pivot (311) and a left bridge pivot (312) with parallel axes;
the right bridge bracket interface (15) comprises a right bridge bracket interface body (151) and a right bridge bracket adjustment screw (152), the right bridge bracket interface body (151) is installed on the right barrel (11);
the left bridge bracket interface (25) comprises a left bridge bracket interface body (251) and a left bridge bracket adjustment screw (252), the left bridge bracket interface body (251) is installed on the left barrel (21);
the right bridge bracket interface body (151) is rotatably mounted on the right bridge pivot (311), the right bridge bracket adjustment screw (152) is screwed into the right bridge bracket interface body (151) perpendicular to the right bridge pivot (311) to lock the right display lens assembly (10) at a certain angle around the right bridge pivot (311);
the left bridge bracket interface body (251) is rotatably mounted on the left bridge pivot (312), and the left bridge bracket adjustment screw (252) is screwed into the left bridge bracket interface body (251) perpendicular to the left bridge pivot (312) to lock the left display lens assembly (20) at a certain angle around the left bridge pivot (312).

3. The dual-optics fusion night vision device according to claim 2, **characterized in that**: the bridge bracket component (30) further includes a right ridge bracket pivot plate (32) and a left ridge bracket pivot plate (33), which are mounted on the bridge bracket body (31);
the right ridge bracket pivot plate (32) is coaxially equipped with a right plate pivot (321) corresponding to the right bridge pivot (311), the right bridge pivot (311) and the right plate pivot (321) are inserted into the right bridge bracket connection hole (1511) on the right bridge bracket interface body (151) from both ends, and the right bridge bracket adjustment screw (152) is screwed into the right adjustment screw hole (1512) that is perpendicular to and through the right bridge bracket connection hole (1511);
the left ridge bracket pivot plate (33) is coaxially equipped with a left plate pivot (331) corresponding to the left bridge pivot (312), the left bridge pivot (312) and the left plate pivot (331) are inserted into the left bridge bracket connection hole (2511) on the left bridge bracket interface body (251) from both ends, and the left bridge bracket adjustment screw (252) is screwed into the left adjustment screw hole (2512) that is perpendicular to and through the left bridge bracket connection hole (2511).

4. The dual-light fusion night vision device according to claim 3, **characterized in that**: the bridge bracket assembly (30) further comprises a right plate pin (34), a left plate pin (35), a right plate screw (36), and a left plate screw (37); the right bridge bracket pivot plate(32) is rotatably mounted on the right rear side of the bridge bracket body (31) through the right plate pin (34), and is locked to the bridge bracket body (31) through the right plate screw (36); the left bridge bracket pivot plate (33) is rotatably mounted on the left rear side of the bridge bracket body (31) through the left plate pin (35), and is locked to the bridge bracket body (31) through the left plate screw (37).

5. The dual-optics fusion night vision device according to claim 3, **characterized in that**: the right bridge pivot (311) and the right plate pivot (321) are each fitted with a pivot washer (38), which abuts against both ends of the right bridge bracket connection hole (1511); and the left bridge pivot (312) and the left plate pivot (331) are each fitted with a pivot washer (38), which abuts against both ends of the left bridge bracket connection hole (2511).

6. The dual-optics fusion night vision device according to any one of claims 1 to 5, **characterized in that**: the bridge bracket body (31) is equipped with a bridge transition interface (313) on its top for external connections; the bridge bracket body (31) is provided with a bridge function knob (314), and the bridge bracket body (31) is provided with bridge function buttons (315) on both the left and right sides of the top, the bridge function knob (314) and the bridge function buttons (315) are used to control and adjust the right display lens group (10) and the left display lens group (20); and the bridge bracket body (31) is provided with bracket function windows (316) for external sensing and internal information transmission on both sides of the front end.

7. The dual-optics fusion night vision device according to any one of claims 1 to 5, **characterized in that**: the left display lens group (20) further includes a left eyepiece adjustment flange (26), and the left eyepiece group (23) is adjustably mounted on the left barrel (21) via the left eyepiece adjustment flange (26).

8. The dual-optics fusion night vision device according to claim 7, **characterized in that**: the left display lens group (20) further includes a left low-light image intensifier (24) and a compression ring (28), the left low-light image intensifier (24) is positioned along the left low-light optical axis between the left low-light objective group (22) and the left eyepiece group (23), and the compression ring (28) is threadedly connected to the left barrel (21) to secure the left low-light image intensifier (24) within the left barrel (21).

9. The dual-optics fusion night vision device according to any one of claims 1 to 5, **characterized in that**: the right barrel (11) includes a front cover plate (111) and a barrel body (112), the front cover plate (111) is installed at a front opening of the barrel body (112), and the right low-light objective group (12) and the infrared lens group (13) are mounted on the front cover plate (111).

10. The dual-optics fusion night vision device according to claim 9, **characterized in that**: the infrared lens group (13) includes an infrared objective (131), an infrared objective adjustment flange (132), and an infrared imaging component (133) positioned along the infrared optical axis; the infrared objective (131) is fixed within the infrared objective adjustment flange (132), which is adjustably mounted on the front cover plate (111); and by moving the infrared objective adjustment flange (132) in a plane perpendicular to the infrared optical axis, the infrared objective (131) can be moved to adjust the infrared imaging position.

11. The dual-optics fusion night vision device according to claim 10, **characterized in that**: the right display lens group (10) further includes an image intensifier bracket (16); the image intensifier bracket (16) is positioned along the right low-light optical axis at the rear end of the right low-light objective group (12), and is adjustably connected to the front cover plate (111); and a right low-light image intensifier (18) is removably installed in the image intensifier bracket (16) along the right low-light optical axis.

12. The dual-optics fusion night vision device according to claim 11, **characterized in that**: the image intensifier bracket (16) includes a mounting tube (161), an adjustment screw ring (162), an optical combiner (163), and an elastic component (164); the mounting tube (161) is used to install the right low-light image intensifier (18); and the adjustment screw ring (162) is connected to the front cover plate (111) and the mounting tube (161) via reverse threads along the right low-light optical axis, so that the mounting tube (161) and the front cover plate (111) move towards or away from each other along the right low-light optical axis when the adjustment screw ring (162) is rotated.

13. The dual-optics fusion night vision device according to claim 12, **characterized in that**: the right display lens group (10) further includes a display component (17) that is signal-connected to infrared lens group (13); the optical combiner (163) is positioned along the right low-light optical axis between the right low-light image intensifier (18) and the eyepiece group (14); and the display component (17) is located on one side of the optical combiner (163) and is connected to the infrared lens group (13) to display infrared images.

14. The dual-optics fusion night vision device according to claim 13, **characterized in that**: the display component (17) includes a display screen (171) and a connecting cable (172), the infrared lens group (13) transmits infrared images to the display screen (171) via the connecting cable (172) for display; and the display screen (171) is larger than a display area (1711) used for displaying the infrared image, allowing the position of the display area (1711) to be adjusted on the display screen (171).
